# EUROPÄISCHE PATENTSCHRIFT

(11) **EP 3 017 933 B1**
(45) Veröffentlichungstag und Bekanntmachung des Hinweises auf die Patenterteilung: **08.09.2021**
(21) Anmeldenummer: 15193445.2
(22) Anmeldetag: 06.11.2015
(51) Int. Cl.: B22F 3/105, B33Y 40/00, B33Y 30/00, B07B 1/42, B22F 10/70, B29C 64/153, B29C 64/35, B29C 64/357, B07B 13/16

(54) **VORRICHTUNG ZUM LASERAUFTRAGSSCHWEISSEN ZUR ADDITIVEN FERTIGUNG DREIDIMENSIONALER OBJEKTE**
DEVICE FOR LASER BUILDUP WELDING FOR THE ADDITIVE MANUFACTURE OF THREE-DIMENSIONAL OBJECTS
DISPOSITIF DE SOUDAGE PAR APPLICATION LASER DESTINEE A LA FABRICATION ADDITIVE D'OBJETS TRIDIMENSIONNELS

(30) Priorität: 06.11.2014 DE 102014116190
(43) Veröffentlichungstag der Anmeldung: 11.05.2016
(73) Patentinhaber: Additive 3D Training GmbH, 16259 Bad Freienwalde (DE)
(72) Erfinder: Hanreich, Klaus, 15745 Wildau (DE); Bock, Andreas, 15745 Wildau (DE)
(74) Vertreter: adares Patent- und Rechtsanwälte Reininger & Partner GmbB

(56) Entgegenhaltungen:
- DE-A1-102009 029 765
- DE-U1-202009 000 825

## Beschreibung

Die Erfindung betrifft eine Vorrichtung zum Laserauftragsschweißen, zum Beispiel Mikro-Laserauftragsschweißen, zur additiven Fertigung dreidimensionaler Objekte durch schichtweises Verfestigen eines Pulvermaterials auf einem Träger, die einen stationär angeordneten Vorratsbehälter für das schichtweise auf den Träger aufzubringende Pulvermaterial und einen dem Träger zugeordneten Aufnahmebehälter zur Aufnahme überschüssigen Pulvermaterials aufweist sowie eine Siebvorrichtung zum Reinigen des in den Vorratsbehälter zurückzuführenden überschüssigen Pulvermaterials umfasst.

Der Betrieb einer Vorrichtung der oben erwähnten Art zum additiven (selektiven) Laserauftragsschweißen bereitet insofern Schwierigkeiten, als im Vorratsbehälter auch im Nacht- und Wochenendbetrieb immer eine ausreichende Pulvermenge vorhanden sein muss, um ein fortlaufendes Auftragsschweißen für die Herstellung des dreidimensionalen Objekts zu gewährleisten. Hierzu reicht es in der Regel aus, wenn das in Auffangbehältern aufgefangene und in einer Siebeinrichtung gereinigte Pulvermaterial regelmäßig in den Vorratsbehälter zurückgeführt wird. Die manuelle Handhabung der schweren Auffangbehälter in Verbindung mit der separat angeordneten Siebeinrichtung und dem Vorratsbehälter ist mit einem erheblichen Aufwand verbunden und erfordert zudem die ständige Anwesenheit von Bedienungspersonal. Darüber hinaus ist auch die zur Neubefüllung oder Reinigung erforderliche Handhabung des in das Gehäuse der Lasersintervorrichtung integrierten Vorratsbehälters sehr aufwändig.

Einer aus der DE 201 07 262 U1 bekannten Lasersintervorrichtung ist eine separat angeordnete, auf Rollen verfahrbare Siebeinrichtung zugeordnet, die über Schlauchleitungen mit in diese eingebundenen Fördereinrichtungen an die Auffangbehälter für überschüssiges Pulvermaterial, an einen Vorratsbehälter für gereinigtes Pulvermaterial und an einen Aufnahmebehälter für aus der Siebeinrichtung abgeschiedenes Pulvermaterial angeschlossen ist. Abgesehen von dem hohen Platzbedarf ist die so ausgebildete Lasersintervorrichtung apparativ sehr aufwändig.

DE 10 2009 029765 A1 offenbart eine Vorrichtung zum Herstellen eines dreidimensionalen Objektes durch aufeinanderfolgendes Verfestigen von Schichten eines mittels elektromagnetischer Strahlung oder Teilchenstrahlung verfestigbaren Aufbaumaterials an den dem jeweiligen Querschnitt des Objektes entsprechenden Stellen, mit einer in einem Bauraum angeordneten Baukammer, die eine Tragevorrichtung zum Tragen des Objektes an einem Träger umfasst, einer Aufbringvorrichtung zum Aufbringen von Schichten des Aufbaumaterials auf die Tragevorrichtung oder eine zuvor gebildete Schicht und eine Bestrahlungsvorrichtung zum Bestrahlen von Schichten des Aufbaumaterials an denen dem jeweiligen Querschnitte des Objektes entsprechenden Stellen sowie einem Überlaufbehälter zur Aufnahme von Aufbaumaterial.

Der Erfindung liegt die Aufgabe zugrunde, eine Vorrichtung zum Laserauftragsschweißen, zum Beispiel Mikro-Laserauftragsschweißen, für die Herstellung dreidimensionaler Objekte so auszubilden, dass mit geringem Arbeits-, Apparate- und Platzaufwand eine selbsttätige Wiedereinführung des überschüssigen und gereinigten Pulvermaterials in den Laserschweißprozess und ein kontinuierlicher Auftragsschweißprozess gewährleistet sind.
Erfindungsgemäß wird die Aufgabe mit einer gemäß den Merkmalen des Patentanspruchs 1 ausgebildeten Laserauftragsschweißvorrichtung gelöst. Zweckmäßige und vorteilhafte Weiterbildungen der Erfindung sind Gegenstand der Unteransprüche.

Bei einer Laserauftragsschweißvorrichtung zur selektiven Fertigung dreidimensionaler Objekte durch Sinterung von schichtweise auf einen Träger aufgebrachtes Pulvermaterial besteht der Grundgedanke der Erfindung darin, dass das vom Träger entfernte - nicht gesinterte, nach einem Siebvorgang aber wiederverwendbare - Pulvermaterial über ein System von in einem der Auftragsschweißvorrichtung zugeordneten Gestell stationär oder beweglich angeordneten, jeweils gasdichten und abdichtend aneinanderfügbaren Behältern zur Aufnahme, zum Transport und zum Sieben in einer in das System integrierten Siebstation und zur Übergabe - und zwar jeweils in einer Schutzgasatmosphäre - selbsttätig wieder in den Vorratsbehälter zurückgeführt wird, um bei geringem Apparate- und Platzbedarf und ohne personellen Aufwand einen fortlaufenden Fertigungsprozess zu gewährleisten.

Erfindungsgemäß ist die einen Sieb-Aufnahmebehälter, ein Sieb und einen Sieb-Weitergabebehälter umfassende, in einer Schutzgasatmosphäre betreibbare Siebvorrichtung in ein zwischen dem Aufnahmebehälter und einem an den Vorratsbehälter angeschlossenen Übergabebehälter gebildetes Transportsystem integriert, das einen an den Aufnahmebehälter oder den Sieb-Aufnahmebehälter koppelbaren und zwischen diesen verfahrbaren Transportbehälter sowie eine Anordnung zum Verfahren der Siebvorrichtung und Anschließen des Sieb-Weitergabebehälters an den Übergabebehälter umfasst, wobei die einzeln jeweils gasdicht verschließbaren Behälter in einem bei der Pulverübergabe in den Transportbehälter oder den Sieb-Aufnahmebehälter oder den Übergabebehälter gekoppelten Zustand gasdicht miteinander verbunden sind.

In weiterer Ausbildung der Erfindung sind der Sieb-Aufnahmebehälter und der Sieb-Weitergabebehälter über einen Flanschverbindungsring fest miteinander verbunden. Das Sieb ist auf einem am Innenumfang des Flanschverbindungsrings elastisch gehaltenen, von einem Ultraschallgenerator angeregten Schwingring angebracht, um die Vibration des Siebes bei geringem Siebdurchmesser zu gewährleisten.

In Ausgestaltung der Erfindung ist die Siebvorrichtung an einem horizontal und vertikal verfahrbaren Kreuzschlitten gehalten. Der Kreuzschlitten ist an einem dem Gehäuse der Laserauftragsschweißvorrichtung unmittelbar zugeordneten Gestell befestigt.

In weiterer Ausgestaltung der Erfindung ist die Siebvorrichtung zur Entleerung des auf dem Sieb verbliebenen Pulvermaterials in einen Abfalleimer um eine horizontale Achse schwenkbar an dem Kreuzschlitten gehalten.

Gemäß einem noch anderen Merkmal der Erfindung sind zum Transport und zur Behandlung des Pulvermaterials in einer Schutzgasatmosphäre mindestens an der Siebvorrichtung eine verschließbare Öffnung zur Schutzgaszufuhr sowie ein Rückschlagventil zur Abführung überschüssigen Gases vorgesehen.

Der Transportbehälter ist zwischen dem Aufnahmebehälter und dem Sieb-Aufnahmebehälter mithilfe eines an dem Gestell verschiebbar gehaltenen Schwenkarms verschwenkbar und kann abwechselnd an den Aufnahmebehälter oder den Sieb-Aufnahmebehälter angeschlossen werden.

Gemäß einem weiteren Merkmal der Erfindung sind die das System umfassenden Behälter in einem nicht aneinander gekoppelten Zustand jeweils durch einen verschiebbaren, federbelasteten Schließkegel gasdicht verschlossen. In einem für die Pulverübergabe zwischen zwei Behältern gasdicht aneinander gedrückten Zustand sind die beiden Behälter durch das Aufeinanderwirken der beiderseitigen Schließkegel entgegen einer Feder-kraft jeweils offengehalten.

Die Behälter weisen erfindungsgemäß einen von der Innenfläche einer trichterförmigen Öffnung ausgehenden, mit Schlitzöffnungen ausgebildeten und am verjüngten Ende in einen Führungszylinder übergehenden Öffnungskegel auf. In dem Führungszylinder ist ein mit dem durch die Kraft einer Druckfeder beaufschlagten Schließkegel verbundener Führungskolben geführt. Der Schließkegel weist einen zur Öffnung hin erweiterten Kegelabschnitt und daran anschließend einen sich verjüngenden Kegelabschnitt auf und im Übergangsbereich der beiden Kegelabschnitte ist ein in einer umlaufenden Außennut gehaltener, in der Schließstellung des Schließkegels an der Innenfläche der trichterförmigen Öffnung anliegender innerer Dichtungsring zum gasdichten Verschließen des betreffenden Behälters in einem nicht mit einem anderen Behälter verbundenen Zustand gehalten.

In weiterer Ausbildung der Erfindung ist an den freien Rand der trichterförmigen Öffnung der Behälter jeweils ein sich nach außen erweiternder Ring angeformt, deren freie Ränder bei der Pulverübergabe zwischen zwei Behältern aneinanderstoßen und durch einen an einem der Ränder gehaltenen äußeren Dichtungsring gegeneinander abgedichtet sind.

In Ausgestaltung der Erfindung ist der Schließkegel zusätzlich in einem an den Öffnungskegel anschließenden Zylinder geführt.

Gemäß einem noch anderen Merkmal der Erfindung ist der Vorratsbehälter zur einfachen Entnahme aus der Laserauf-tragsschweißvorrichtung in Nuten eines Halteelements horizontal verschiebbar gehalten und das Halteelement kann an einer horizontal beweglichen Führungsplatte mithilfe eines Motors angehoben und abgesenkt werden.

In weiterer Ausgestaltung der Erfindung sind die Siebbehandlung und die zugehörigen Transportschritte in Abhängigkeit von einer vorgegebenen Anzahl erzeugter Auftragsschweißschichten steuerbar.

Ein Ausführungsbeispiel der Erfindung wird anhand der Zeichnung näher erläutert. Es zeigen:
Fig. 1 eine 3D-Ansicht der Vorderseite einer Lasersintervorrichtung mit einem dieser zugeordneten Aufbereitungs- und Transportsystem für überschüssiges Pulvermaterial aus dem Laserschweißprozess;
Fig. 2 eine 3D-Ansicht der Rückseite der Vorrichtung nach Fig. 1;
Fig. 3 eine detaillierte 3D-Ansicht einer Handhabungsvorrichtung für den Vorratsbehälter der Laserauftragsschweißvorrichtung;
Fig. 4 eine Ansicht nach Fig. 3, jedoch in der von der Laserauftragsschweißvorrichtung entfernten Position des Vorratsbehälters;
Fig. 5 eine Schnittansicht eines stationär an der Laserauftragsschweißvorrichtung angeordneten Aufnahmebehälters für überschüssiges, verunreinigtes Pulvermaterial und eines Transportbehälters, jeweils in geschlossenem Zustand;
Fig. 6 den Aufnahmebehälter und den Transportbehälter in gasdicht miteinander verbundenem, jeweils offenem Zustand für die Pulverübergabe;
Fig. 7 eine 3D-Ansicht der Laserauftragsschweißvorrichtung (ohne Gestell) mit unter den Aufnahmebehälter verschwenktem Transportbehälter;

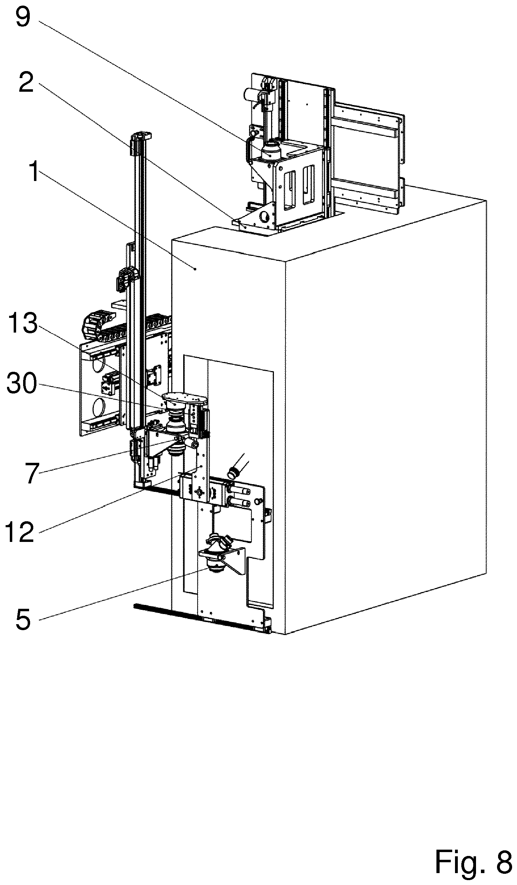

Fig. 8 eine Ansicht nach Fig. 7, jedoch mit über eine Siebvorrichtung verschwenktem Transportbehälter;
Fig. 9 eine Schnittansicht der Siebvorrichtung und des oberhalb angeordneten Transportbehälters;
Fig. 10 eine Schnittansicht gemäß Fig. 9, jedoch mit an die Siebvorrichtung angeschlossenem Transportbehälter;
Fig. 11 eine 3D-Ansicht der Siebvorrichtung;
Fig. 12 eine Ansicht der Laserauftragsschweißvorrichtung gemäß den Figuren 7 und 8, jedoch mit der mithilfe des Kreuzschlittens auf einen Übergabebehälter aufgesetzten Siebvorrichtung; und
Fig. 13 eine Schnittansicht der Pulveraufnahmebehälter der Siebvorrichtung bei der Übergabe des gereinigten Pulvermaterials in den Übergabebehälter.

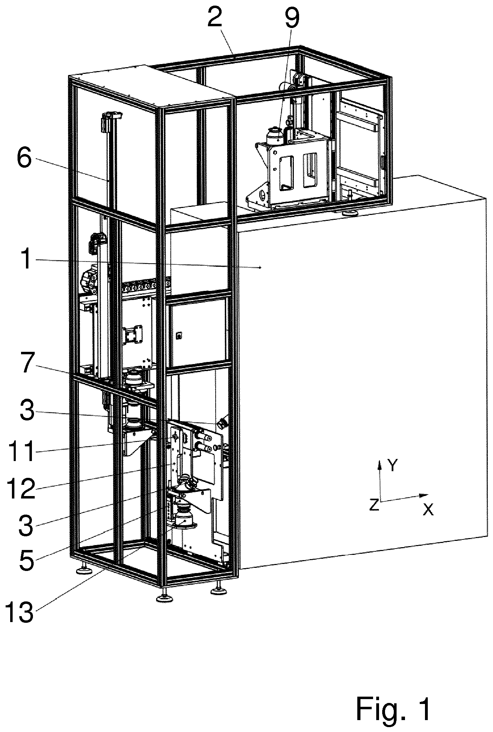

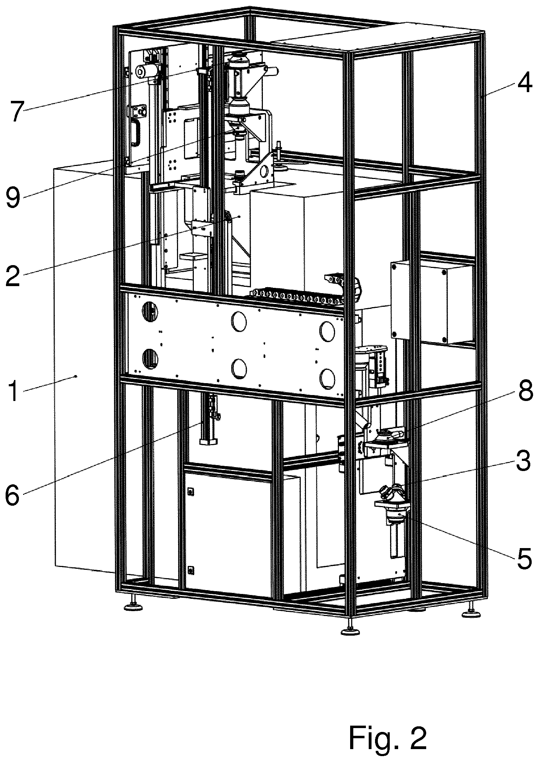

Die in bekannter Weise ausgebildete Laserauftragsschweißvorrichtung zur Herstellung dreidimensionaler Objekte ist in einem Gehäuse 1 untergebracht, dem ein Vorratsbehälter 2 für das das zu verarbeitende Pulvermaterial zugeordnet ist. Ein in dem Gehäuse 1 angeordneter Träger (nicht dargestellt), auf dem das dreidimensionale Objekt hergestellt wird, steht über Schlauchanschlüsse 3 und Schlauchleitungen (nicht dargestellt) mit einem außerhalb des Gehäuses 1 stationär an einem Gestell 4 angeordneten, weiter unten näher beschriebenen Aufnahmebehälter 5 für das vom Träger der Laserauftragsschweißvorrichtung abgestreifte überschüssige Pulvermaterial in Verbindung. An einem an dem Gestell montierten, waagerecht und senkrecht (x- und y-Richtung) verfahrbaren Kreuzschlitten 6 ist eine um die z-Achse drehbare Siebvorrichtung 7 zur Reinigung des aus der Lasersintervorrichtung in den Aufnahmebehälter 5 abgeführten überschüssigen Pulvermaterials angebracht. Die Vorrichtung weist außerdem einen Abfallbehälter 8 zur Aufnahme der im Siebprozess auf dem Sieb 33 der Siebeinrichtung 7 verbliebenen abgetrennten Bestandteile des überschüssigen Pulvermaterials auf. Oberhalb des Vorratsbehälters 2 befindet sich ein zur Einleitung des in der Siebvorrichtung 7 gereinigten Pulvermaterials in den Vorratsbehälter 2 vorgesehener, stationär angeordneter Übergabebehälter 9, der über Schlauchanschlüsse 10 und eine Schlauchleitung (nicht dargestellt) mit dem Vorratsbehälter 2 verbunden ist. An dem Gestell 4 ist weiterhin ein an einem um eine Drehachse 11 drehbaren Schwenkarm 12 befestigter Transportbehälter 13 zum Transport des überschüssigen Pulvermaterials vom Aufnahmebehälter 5 zur Siebvorrichtung 7 angeordnet. Gemäß der in Fig. 1 gezeigten Darstellung befindet sich der Transportbehälter 13 in der an den Aufnahmebehälter 5 angeschlossenen Position zur Übergabe des Pulvermaterials vom Aufnahmebehälter 5 in den Transportbehälter 13, während die Siebeinrichtung 7 bereits in der zur Aufnahme des Pulver-materials aus dem nach oben geschwenkten Transportbehälter 13 geeigneten Lage positioniert ist. In Fig. 2 ist die Siebvorrichtung 7 in der mit dem Kreuzschlitten 6 auf den Übergabebehälter 9 verfahrenen Lage dargestellt.

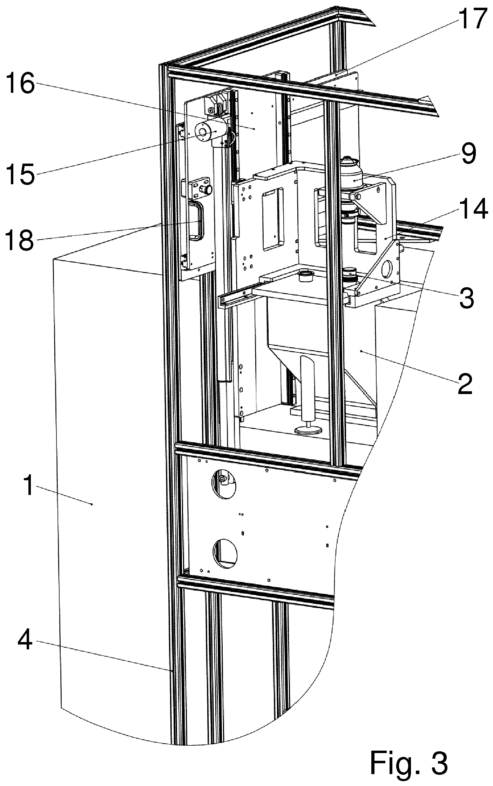

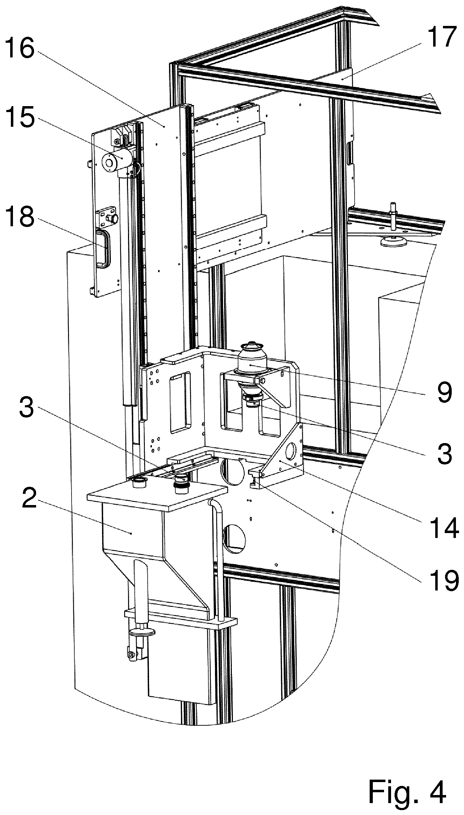

Fig. 3 ist eine Teilansicht der Rückseite der Lasersintervorrichtung im Bereich des Vorratsbehälters 2, der aus unterschiedlichen Gründen, beispielsweise zu Reinigungszwecken, aus der Vorrichtung entfernt werden muss. Um diesen üblicherweise mit einem erheblichen manuellen Arbeitsaufwand verbundenen Vorgang zu erleichtern, ist ein mit dem Vorratsbehälter 2 verbundenes Halteelement 14, an dem auch der Übergabebehälter 9 angebracht ist, mithilfe eines Motors 15 entlang einer ersten Führungsplatte 16 in senkrechter Richtung verfahrbar. Fig. 3 zeigt den Vorratsbehälter 2 in der am Gehäuse 1 angeordneten Betriebsposition. Nachdem das Halteelement 14 mit dem daran gehaltenen Vorratsbehälter 2 zunächst senkrecht nach oben verfahren worden ist, wird die an einer zweiten Führungsplatte 17 waagerecht geführte erste Führungsplatte 16 zusammen mit dem Vorratsbehälter 2 an einem Handgriff 18 waagerecht aus der Gestell 4 herausgezogen. Anschließend wird das Halteelement 14 zusammen mit dem Vorratsbehälter 2 entlang der Führungsplatte 16 nach unten abgesenkt und der in Haltenuten 19 des Halteelements 14 gehaltene Vorratsbehälter 2 kann aus dem Halteelement 14 herausgezogen und gereinigt, ausgewechselt oder neu befüllt werden. Fig. 4 zeigt das Halteelement 14 in der aus dem Gestell 4 herausgezogenen und nach unten abgesenkten Lage. Der Vorratsbehälter 2 ist aus dem Halteelement 14 herausgezogen.

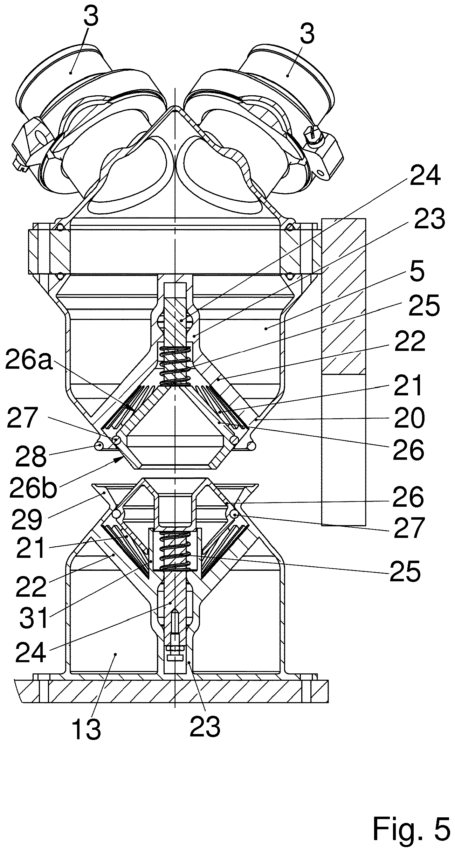

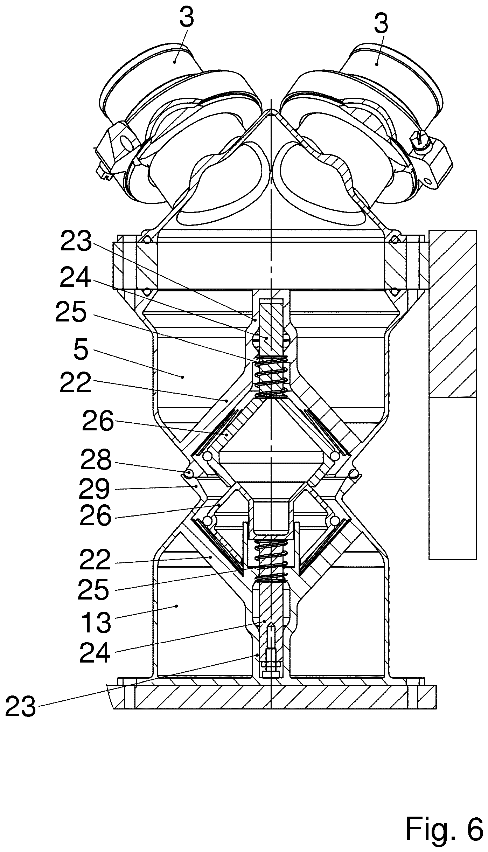

Die Figuren 5 und 6 zeigen in einer Schnittansicht den Aufnahmebehälter 5 für das im Lasersinterprozess nicht benötigte, überschüssige Pulvermaterial sowie den unter den Aufnahmebehälter verschwenkten Transportbehälter 13. Der Aufnahmebehälter 5 kann über ein an diesem vorgesehenes Ventil (nicht dargestellt) mit einem Schutzgas befüllt werden, so dass die Aufnahme und der Transport des Pulvermaterials zur Siebvorrichtung 7 in einer Schutzgasatmosphäre erfolgen kann. In Fig. 5 sind die beiden Behälter in der jeweils gasdicht geschlossenen Position dargestellt, und zwar zum einen zur Aufnahme des Pulvermaterials im Aufnahmebehälter 5 und zum anderen zum Transport des in den Transportbehälter 13 gefüllten Pulvermaterials zur Siebvorrichtung 7. Fig. 6 zeigt die beiden abdichtend miteinander verbundenen Behälter in der jeweils offenen Stellung bei der im Wesentlichen gasdichten Übergabe des Pulvermaterials in den Transportbehälter 13.

Der über die Schlauchanschlüsse 3 an die Lasersintervorrichtung angeschlossene Aufnahmebehälter 5 weist einen von einer trichterförmigen Öffnung 20 ausgehenden, mit Schlitzöffnungen 21 versehenen Öffnungskegel 22 mit an dessen zulaufendem Ende angeformtem Führungszylinder 23 auf. In dem Öffnungskegel 22 ist ein mithilfe eines Führungskolbens 24 in dem Führungszylinder 23 entgegen der Wirkung einer Druckfeder 25 geführter, sich ausgehend vom Führungskolben 24 erweiternder und dann wieder verjüngender Schließkegel 26 mit in einer umlaufenden Außennut gehaltenem, den Aufnahmebehälter 5 in seiner Schließstellung am Innenumfang der trichterförmigen Öffnung 20 gasdicht verschließenden Dichtungsring 27 angeordnet. Am Außenumfang des zulaufenden Endes der trichterförmigen Öffnung 20 ist in einer umlaufenden Nut ein äußerer Dichtungsring 28 gehalten.

Der an dem Schwenkarm 12 angebrachte Transportbehälter 13 weist im Wesentlichen die gleichen Bauteile 20 bis 27 wie der Aufnahmebehälter 5 auf. An die trichterförmige Öffnung 20 ist noch ein sich konisch erweiternder Ring 29 angeformt.

Fig. 5 zeigt den Aufnahmebehälter 5 und den Transportbehälter 13 in der jeweils gasdicht geschlossenen Stellung, in der der am Schließkegel 26 gehaltene innere Dichtungsring 27 unter der Wirkung der Druckfeder 25 abdichtend an der Innenfläche der trichterförmigen Öffnung 20 anliegt. Beim Anschließen des Transportbehälters 13 an den Aufnahmebehälter 5 werden die beiden Schließkegel 26 entgegen der Wirkung der jeweiligen Druckfeder 25 in Richtung des jeweiligen Öffnungskegels 22 verschoben. Im Wesentlichen gleichzeitig wird der äußere Dichtungsring 28 der trich-terförmigen Öffnung 20 des Aufnahmebehälters 5 an die Innenfläche des konisch erweiterten Rings 29 der trichterförmigen Öffnung 20 des Transportbehälters 13 gedrückt. Dadurch wird die jeweilige trichterförmige Öffnung 20 der beiden Behälter freigegeben und nahezu gleichzeitig werden beide Behälter mithilfe des äußeren Dichtungsrings 28 gegeneinander abgedichtet, so dass das Pulvermaterial ohne Verbindung zur Außenluft vom Aufnahmebehälter 5 in den Transportbehälter 13 fließen kann.

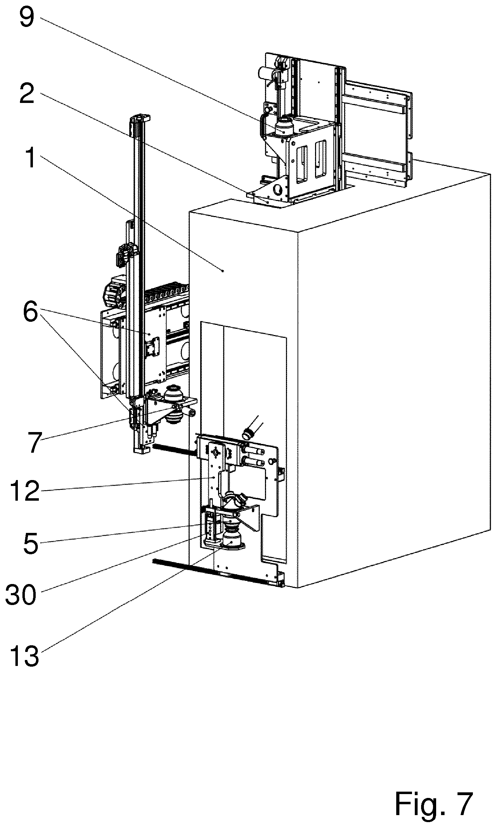

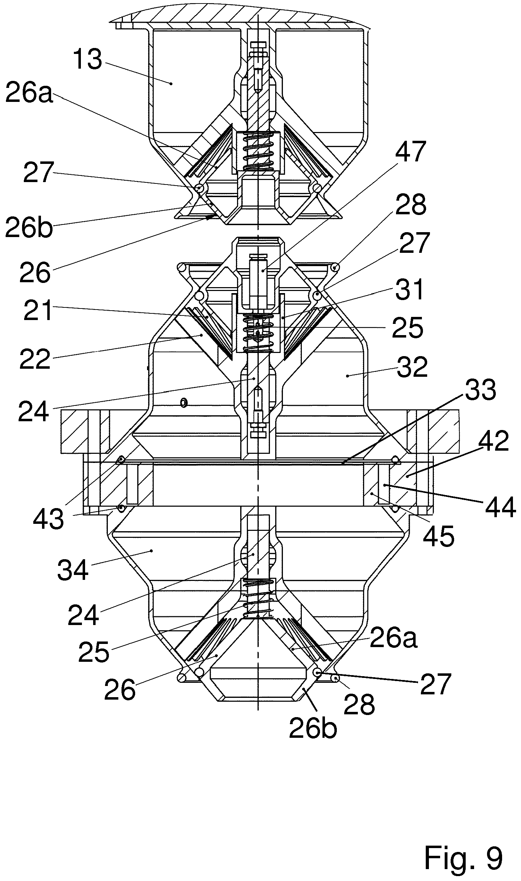

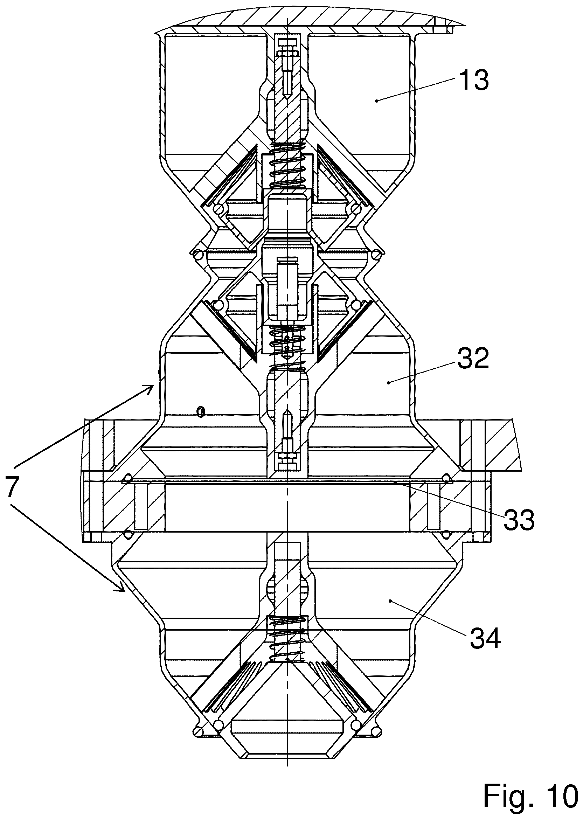

Fig. 7 zeigt die - der Einfachheit halber ohne Gestell dargestellte - Laserauftragsschweißvorrichtung zum Zeitpunkt der Übergabe des Pulvermaterials vom Aufnahmebehälter 5 in der Transportbehälter 13 gemäß der anhand von Fig. 6 erläuterten Behälterpositionen. Im darauf folgenden Schritt wird der Transportbehälter 13 am Schwenkarm 12 mit einer Antriebsvorrichtung 30 nach unten verfahren, so dass sich der Aufnahmebehälter 5 und der Transportbehälter 13 in der in Fig. 5 gezeigten geschlossenen, voneinander getrennten Lage befinden und der geschlossene Transportbehälter 13 in eine Position oberhalb der beidseitig geschlossenen Siebvorrichtung 7 gemäß Fig. 9 verschwenkt und - wie Fig. 10 zeigt - in eine Position zur Übergabe des verunreinigten Pulvermaterials auf die Siebvorrichtung 7 aufgesetzt werden kann.

Die Siebvorrichtung 7 umfasst einen mit dem oben beschriebenen Aufnahmebehälter 5 im Wesentlichen identischen Sieb-Aufnahmebehälter 32 für ungereinigtes Pulvermaterial, wobei jedoch der Führungskolben 24 - ähnlich wie bei dem Transportbehälter 13 - an der nach außen weisenden Seite des Schließkegels 26 angeformt und zusätzlich in einem Zylinder 31 geführt ist. Getrennt durch ein mit Ultraschall betriebenes Sieb 33 ist an der offenen Seite des Sieb-Aufnahmebehälters 32 für ungereinigtes Pulvermaterial die offene Seite eines Sieb-Weitergabe-behälters 34 für gereinigtes (gesiebtes) Pulvermaterial über einen Flanschverbindungsring 42 und Dichtungsringe 43 gasdicht befestigt. In den Flanschverbindungsring 42 ist eine bis nahe an dessen Unterseite reichende umlaufende Nut 44 eingeformt, so dass am Innenrand des Flanschverbindungsringes 42 ein elastisch gehaltener Auflagering 45 für das Sieb 33 ausgebildet ist. Das Sieb 33 wird dadurch nicht am Sieb-Aufnahmebehälter 32 verklemmt, sondern kann unter der Wirkung des vom Ultraschallgenerator 35 angeregten Auflagerings 45 frei vibrieren. Der Sieb-Weitergabebehälter 34 für das gesiebte Pulvermaterial ist in gleicher Weise wie der an die Laserauftragsschweißvorrichtung stationär angeordnete Aufnahmebehälter 5 ausgebildet. Fig. 10 zeigt die Siebvorrichtung 7 mit auf den Sieb-Aufnahmebehälter 32 aufgesetztem Transportbehälter 13 bei der Übergabe des verunreinigten Pulvermaterials in den Siebaufnahmebehälter 32 und auf das Sieb 33.

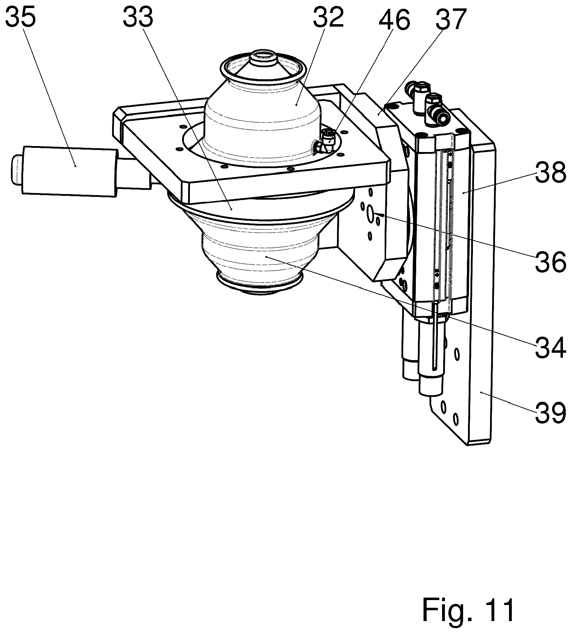

Wie Fig. 11 zeigt, ist das Sieb 33 der Siebvorrichtung 7 an einen Ultraschallgenerator 35 angeschlossen und die Siebvorrichtung 7 ist als Ganzes mit einer um eine waagerechte Achse 36 drehbaren Schwenkplatte 37 verbunden, die über einen Schwenkantrieb 38 und eine Befestigungsplatte 39 am Kreuzschlitten 6 gehalten ist. An der gasdicht geschlossenen Siebvorrichtung 7 ist eine Steckverschraubung 46 angeordnet, um gegebenenfalls ein Schutzgase in die Siebvorrichtung einleiten zu können. Beim Einleiten des Schutzgases wird in der Siebvorrichtung vorhandenes überschüssiges Gas (Luft) über ein Rückschlagventil 47 (Fig. 9) nach außen abgeleitet.

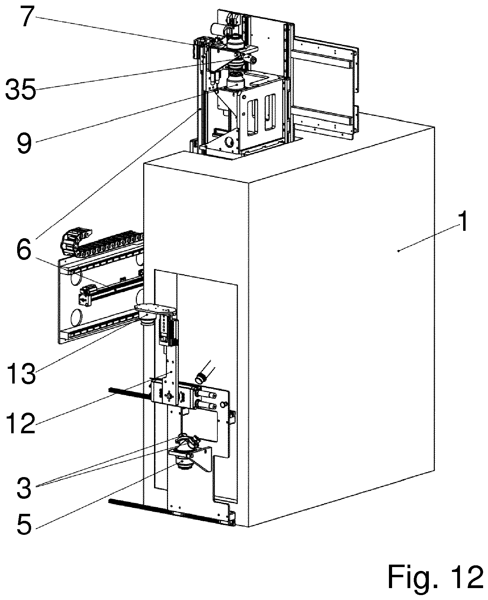

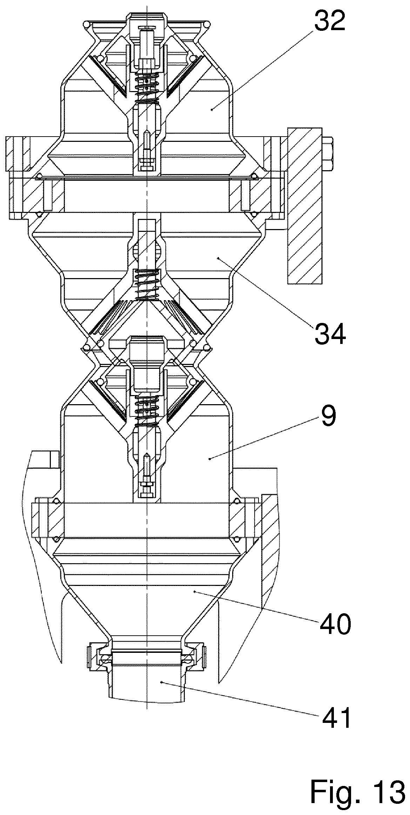

Fig. 12 zeigt die Lasersintervorrichtung (ohne Gestell) mit der auf den Übergabebehälter 9 aufgesetzten Position der Siebvorrichtung 7 und in Fig. 13 ist in einer Schnittansicht die mit dem Übergabebehälter 9 gasdicht verbundene Siebstation 7 bei der Übergabe des gereinigten Pulvermaterials vom Sieb-Weitergabebehälter 34 in den Übergabebehälter 9 und von dort über einen trichterförmigen Schlauchanschluss 40 und eine Schlauchleitung 41 in den Vorratsbehälter (hier nicht dargestellt) wiedergegeben. Die Ausbildung des Übergabebehälters 9 stimmt im Wesentlichen mit der Ausbildung des Transportbehälters 13 überein. Wenn der Sieb-Weitergabebehälter 34 entleert ist, wird die Siebvorrichtung 7 mithilfe des Kreuzschlittens 6 über einen Abfallbehälter (nicht dargestellt) verfahren und mit dem Schwenkantrieb 38 um 180° gedreht, so dass der auf dem Sieb 33 verbliebene, nicht wiederverwertbare Pulveranteil aus der Siebvorrichtung 7 entfernt werden kann.

### Bezugszeichenliste

- 1: Gehäuse
- 2: Vorratsbehälter
- 3: Schlauchanschlüsse
- 4: Gestell
- 5: Aufnahmebehälter
- 6: Kreuzschlitten
- 7: Siebvorrichtung
- 8: Abfalleimer
- 9: Übergabebehälter
- 10: Schlauchanschlüsse
- 11: Drehachse
- 12: Schwenkarm
- 13: Transportbehälter
- 14: Halteelement
- 15: Motor
- 16: erste Führungsplatte
- 17: zweite Führungsplatte
- 18: Handgriff
- 19: Haltenuten
- 20: trichterförmige Öffnung
- 21: Schlitzöffnungen
- 22: Öffnungskegel
- 23: Führungszylinder
- 24: Führungskolben
- 25: Druckfeder
- 26: Schließkegel (26a, 26b erweiterter/verjüngter Kegelabschnitt)
- 27: innerer Dichtungsring
- 28: äußerer Dichtungsring
- 29: erweiterter Ring
- 30: Antriebsvorrichtung
- 31: Zylinder
- 32: Sieb-Aufnahmebehälter
- 33: Sieb
- 34: Sieb-Weitergabebehälter
- 35: Ultraschallgenerator
- 36: waagerechte Achse
- 37: Schwenkplatte
- 38: Schwenkantrieb
- 39: Befestigungsplatte
- 40: Schlauchanschluss
- 41: Schlauchleitung
- 42: Flanschverbindungsring
- 43: Dichtungsringe
- 44: umlaufende Nut in 42
- 45: Schwingring
- 46: Steckverschraubung
- 47: Rückschlagventil

## Patentansprüche

1. Laserauftragsschweißvorrichtung zur additiven Fertigung dreidimensionaler Objekte durch schichtweises Verfestigen eines Pulvermaterials auf einem Träger, die einen stationär angeordneten Vorratsbehälter (2) für das schichtweise auf den Träger aufzubringende Pulvermaterial und einen dem Träger zugeordneten Aufnahmebehälter (5) zur Aufnahme von überschüssigen Pulvermaterials aufweist sowie eine Siebvorrichtung (7) zum Reinigen des in den Vorratsbehälter (2) zurückzuführenden überschüssigen Pulvermaterials umfasst, wobei die einen Sieb-Aufnahmebehälter (32), ein Sieb (33) und einen Sieb-Weitergabebehälter (34) umfassende, in einer Schutzgasatmosphäre betreibbare Siebvorrichtung (7) in ein zwischen dem Aufnahmebehälter (5) und einem an den Vorratsbehälter (2) angeschlossenen Übergabebehälter (9) gebildetes Transportsystem integriert ist, das einen an den Aufnahmebehälter (5) oder den Sieb-Aufnahmebehälter (32) koppelbaren und zwischen diesen verfahrbaren Transportbehälter (13) sowie eine Anordnung zum Verfahren der Siebvorrichtung (7) und Anschließen des Sieb-Weitergabebehälters (34) an den Übergabebehälter (9) umfasst, wobei die jeweils gasdicht verschließbaren Behälter (5, 9, 13, 32, 34) in einem bei der Pulverübergabe in den Transportbehälter (13) oder den Sieb-Aufnahmebehälter (32) oder den Übergabebehälter (9) gekoppelten Zustand gasdicht miteinander verbunden sind.

2. Vorrichtung nach Anspruch 1, **dadurch gekennzeichnet, dass** der Sieb-Aufnahmebehälter (32) und der Sieb-Weitergabebehälter (34) über einen Flanschverbindungsring (42) fest miteinander verbunden sind und das Sieb (33) auf einem am Innenumfang des Flanschverbindungsrings (42) elastisch gehaltenen, von einem Ultraschallgenerator (35) angeregten Schwingring (45) angebracht ist.

3. Vorrichtung nach Anspruch 1 oder 2, **dadurch gekennzeichnet, dass** die Siebvorrichtung (7) an einem horizontal und vertikal verfahrbaren Kreuzschlitten (6) gehalten ist, der an einem dem Gehäuse (1) der Laserauftragsschweißvorrichtung zugeordneten Gestell (4) befestigt ist.

4. Vorrichtung nach Anspruch 3, **dadurch gekennzeichnet, dass** die Siebvorrichtung (7) zur Entleerung des auf dem Sieb (33) verbliebenen Pulvermaterials in einen Abfalleimer (8) um eine horizontale Achse (36) schwenkbar an dem Kreuzschlitten (6) gehalten ist.

5. Vorrichtung nach einem der Ansprüche 1 bis 4, **dadurch gekennzeichnet, dass** zum Transport und zur Behandlung des Pulvermaterials in einer Schutzgasatmosphäre mindestens an der Siebvorrichtung (7) eine durch eine Steckverschraubung (46) verschließbare Öffnung zur Schutzgaszufuhr sowie ein Rückschlagventil (47) zur Abführung überschüssigen Gases vorgesehen ist.

6. Vorrichtung nach Anspruch 1 , **dadurch gekennzeichnet, dass** der Transportbehälter (13) zwischen dem Aufnahmebehälter (5) und dem Sieb-Aufnahmebehälter (32) mithilfe eines an dem Gestell (4) verschiebbar gehaltenen Schwenkarms (12) verschwenkbar und abwechselnd an den Aufnahmebehälter (5) oder den Sieb-Aufnahmebehälter (32) koppelbar ist.

7. Vorrichtung nach Anspruch 1, **dadurch gekennzeichnet, dass** die Behälter (5, 9, 13, 32, 34) in einem nicht aneinander gekoppelten Zustand jeweils durch einen verschiebbaren, federbelasteten Schließkegel (26) gasdicht verschlossen sind und in einem für die Pulverübergabe zwischen zwei Behältern gasdicht aneinander gedrückten Zustand durch das Aufeinanderwirken der beiderseitigen Schließkegel (26) entgegen einer Federkraft jeweils offengehalten sind.

8. Vorrichtung nach Anspruch 7, **dadurch gekennzeichnet, dass** die Behälter (5, 9, 13, 32, 34) einen von der Innenfläche einer trichterförmigen Öffnung (20) ausgehenden, mit Schlitzöffnungen (21) ausgebildeten und am verjüngten Ende in einen Führungszylinder (23) übergehenden Öffnungskegel (22) aufweisen und in dem Führungszylinder (23) ein mit dem durch die Kraft einer Druckfeder (25) beaufschlagten Schließkegel (26) verbundener Führungskolben (24) geführt ist; wobei der Schließkegel (26) einen zur Öffnung (22) hin erweiterten Kegel-abschnitt (26a) und daran anschließend einen sich verjüngenden Kegelabschnitt (26b) aufweist und im Übergangsbereich der beiden Kegelabschnitte (26a, 26b) ein in einer umlaufenden Außennut gehaltener, in der Schließstellung des Schließkegels (26) an der Innenfläche der trichterförmigen Öffnung (20) anliegender innerer Dichtungsring (27) zum gasdichten Verschließen des betreffenden Behälters in einem nicht mit einem anderen Behälter verbundenen Zustand gehalten ist.

9. Vorrichtung nach Anspruch 8, **dadurch gekennzeichnet, dass** an den freien Rand der trichterförmigen Öffnung (20) der Behälter (5, 9, 13, 32, 34) jeweils ein sich nach außen erweiternder Ring (29) angeformt ist, deren freie Ränder bei der Pulverübergabe zwischen zwei Behältern aneinanderstoßen und durch einen an einem der Ränder gehaltenen äußeren Dichtungsring (28) gegeneinander abgedichtet sind.

10. Vorrichtung nach einem der Ansprüche 7 bis 9, **dadurch gekennzeichnet, dass** der Schließkegel (26) zusätzlich in einem an den Öffnungskegel (22) anschließenden Zylinder (31) geführt ist.

11. Vorrichtung nach Anspruch 1, **dadurch gekennzeichnet, dass** der Vorratsbehälter (2) zur Entnahme aus der Lasersintervorrichtung in Nuten (19) eines Halteelements (14) manuell horizontal verschiebbar gehalten ist und das Halteelement (14) an einer horizontal beweglichen Führungsplatte (19) mithilfe eines Motors (15) angehoben und abgesenkt werden kann.

12. Vorrichtung nach einem der vorhergehenden Ansprüche, **dadurch gekennzeichnet, dass** die Siebbehandlung und die zugehörigen Transportschritte in Abhängigkeit von einer vorgegebenen Anzahl erzeugter Auftragsschweißschichten steuerbar sind.

## Claims

1. A laser build-up welding device for additive production of three-dimensional objects by solidifying a powder material in layers on a carrier, which has a stationary storage container (2) for the powder material to be applied in layers to the carrier and a receiving container (5) for receiving excess powder material, which is assigned to the carrier, as well as a sieve device (7) for cleaning the excess powder material to be returned to the storage container (2), wherein the sieve device (32) comprising a sieve receiving container (32), a sieve (33) and a sieve transmission container (34) and being operable into a protective gas atmosphere is integrated into a transport system formed between the receiving container (5) and a transfer container (9) connected to the storage container (2), the transport system comprising a transport container (13) which can be coupled to the receiving container (5) or the sieve receiving container (32) and moved between them as well as an arrangement for moving the sieve device (7) and connecting the sieve transmission container (34) to the transfer container (9), wherein the respective gas-tightly closable containers (5, 9, 13, 32, 34) are connected to one another in a gas-tight manner in a coupled state, when the powder is transferred into the transport container (13) or the sieve receiving container (32) or the transfer container (9).

2. The device according to claim 1, **characterized in that** the sieve receiving container (32) and the sieve transmission container (34) are firmly connected to one another via a flange connecting ring (42) and the sieve (33) is attached to a vibrating ring (45) held on the inner circumference of the flange connecting ring (42) and excited by an ultrasonic generator (35).

3. The device according to claim 1 or 2, **characterized in that** the sieve device (7) is held on a horizontally and vertically movable compound slide (6) which is attached to a frame (4) assigned to the housing (1) of the laser build-up welding device.

4. The device according to claim 3, **characterized in that** the sieve device (7) for emptying the powder material remaining on the sieve (33) into a waste bin (8) is held on the compound slide (6) so as to be pivotable about a horizontal axis (36).

5. The device according to one of claims 1 to 4, **characterized in that** for the transport and treatment of the powder material in a protective gas atmosphere an opening for the protective gas supply closable by a plug-in screw connection (46) as well as a non-return valve (47) for discharging gas in excess are provided at least onto the sieve device (7).

6. The device according to claim 1, **characterized in that** the transport container (13) is pivotable between the receiving container (5) and the sieve receiving container (32) with the aid of a swivel arm (12) held slidably on the frame (4) and alternately couplable to the receiving container (5)) or the sieve receiving container (32).

7. The device according to claim 1, **characterized in that** the containers (5, 9, 13, 32, 34) are each closed gas-tightly in a state non-coupled to each other by a slidable spring-loaded closing cone (26) and are held open in a gas-tight state pressed against one another for the powder transfer between two containers by the interaction of the closing cones (26) on both sides against a spring force.

8. The device according to claim 7, **characterized in that** the containers (5, 9, 13, 32, 34) have an opening cone (22) extending from the inner surface of a funnel-shaped opening (20), formed with slot openings (21) and turning into a guide cylinder (23) at the tapered end, and a guide piston (24) connected to the closing cone (26) acted upon by the force of a compression spring (25) is guided in the guide cylinder (23); wherein the closing cone (26) has a cone section (26a) widened towards the opening (22) and a tapering cone section (26b) adjoining it and an inner sealing ring (27) for gas-tight closing of the respective container in a state not connected to another container, which is held in a circumferential outer groove, and fitting in the closed position of the closing cone (26) onto the inner surface of the funnel-shaped opening (20) is held in the transition area of the two cone sections (26a, 26b).

9. The device according to claim 8, **characterized in that** an outwardly widening ring (29) is formed respectively onto the free edge of the funnel-shaped opening (20) of the container (5, 9, 13, 32, 34), the free edges of which abut to each other during the powder transfer between two containers and are sealed against one another by an outer sealing ring (28) held on one of the edges.

10. The device according to one of claims 7 to 9, **characterized in that** the closing cone (26) is additionally guided in a cylinder (31) adjoining the opening cone (22).

11. The device according to claim 1, **characterized in that** the storage container (2) for removal from the laser sintering device is held manually horizontally slidably in grooves (19) of a holding element (14) and the holding element (14) can be raised and lowered on a horizontally movable guide plate (19) with the aid of a motor (15).

12. The device according to one of the preceding claims, **characterized in that** the sieve treatment and the associated transport steps can be controlled in dependency of a predetermined number of generated build-up welding layers.

## Revendications

1. Un dispositif de soudage au laser à superposition pour la production additive d'objets tridimensionnels par solidification d'un matériau en poudre couche par couche sur un support, qui comporte un réservoir de stockage fixe (2) pour le matériau en poudre à appliquer couche par couche sur le support et un réservoir de réception (5) pour recevoir le matériau en poudre en excès, qui est associé au support, ainsi qu'un dispositif de tamis (7) pour nettoyer le matériau en poudre en excès pour être retourné au réservoir de stockage (2), dans lequel le dispositif de tamis (7) comportant un réservoir de réception de tamis (32), un tamis (33) et un réservoir de transmission de tamis (34) et étant opérable en une atmosphère de gaz protecteur est intégré dans un système de transport qui est formé entre le réservoir de réception (5) et un réservoir de transfert (9) couplé au réservoir de stockage (2) et qui comporte un réservoir de transport (13) qui peut être couplé au réservoir de réception (5) ou au réservoir de réception de tamis (32) et déplacé entre ceux-ci ainsi qu'un agencement pour déplacer le dispositif de tamis (7) et relier le réservoir de transmission de tamis (34) au réservoir de transfert (9), dans lequel les réservoirs (5, 9, 13, 32, 34) respectifs qui peuvent être fermés en une manière étanche aux gaz sont reliés les uns aux autres d'une manière étanche aux gaz à l'état couplé, lorsque la poudre est transférée dans le réservoir de transport (13) ou le réservoir de réception de tamis (32) ou le réservoir de transfert (9).

2. Le dispositif selon la revendication 1, **caractérisé en ce que** le réservoir de réception de tamis (32) et le réservoir de transmission de tamis (34) sont solidement reliés l'un à l'autre par une bride annulaire de raccordement (42) et le tamis (33) est relié élastiquement à un anneau vibrant (45) excité par un générateur d'ultrasons (35) et maintenu de manière élastique sur la circonférence intérieure de la bride annulaire de raccordement (42).

3. Le dispositif selon la revendication 1 ou 2, **caractérisé en ce que** le dispositif de tamis (7) est maintenu sur un chariot croisé (6) qui peut être déplacé horizontalement et verticalement et qui est fixé sur un châssis (4) associé à un boîtier (1) du dispositif de soudage au laser à superposition.

4. Le dispositif selon la revendication 3, **caractérisé en ce que** le dispositif de tamis (7) est maintenu au chariot croisé (6) de manière à pouvoir pivoter autour d'un axe horizontal (36) pour vider le matériau en poudre restant sur le tamis (33) dans une poubelle (8).

5. Le dispositif selon l'une des revendications 1 à 4, **caractérisé en ce que** pour le transport et le traitement du matériau en poudre dans une atmosphère de gaz protecteur une ouverture pour l'alimentation en gaz protecteur qui peut être fermée par un raccord à vis enfichable (46) et un clapet anti-retour (47) pour l'évacuation de gaz en excès sont prévus au moins sur le dispositif de tamis (7).

6. Le dispositif selon la revendication 1, **caractérisé en ce que** le réservoir de transport (13) peut être pivoter entre le réservoir de réception (5) et le réservoir de réception de tamis (32) à l'aide d'un bras pivotant (12) maintenu déplaçable sur le châssis (4) et peut être couplé alternativement au réservoir de réception (5) ou au réservoir de réception de tamis (32).

7. Le dispositif selon la revendication 1, **caractérisé en ce que** les réservoirs (5, 9, 13, 32, 34) sont respectivement fermés de manière étanche aux gaz dans l'état non couplé par un cône de fermeture (26) déplaçable et chargé à ressort et maintenus ouverts par l'interaction des cônes de fermeture (26) sur les deux côtés contre une force de ressort à l'état pressé l'un contre l'autre et étanche aux gaz pour le transfert de la poudre entre deux réservoirs.

8. Le dispositif selon la revendication 7, **caractérisé en ce que** les réservoirs (5, 9, 13, 32, 34) ont un cône d'ouverture (22) qui part de la surface intérieure d'une ouverture en forme d'entonnoir (20), qui est formé avec des ouvertures à fente (21) et qui se change à l'extrémité effilée dans un cylindre de guidage (23), et un piston de guidage (24) raccordé au cône de fermeture (26) sollicité par la force d'un ressort de compression (25) est guidé dans le cylindre de guidage (23); dans lequel le cône de fermeture (26) a une section de cône (26a) élargie vers l'ouverture (22) et à côté de celle-ci une section de cône effilée (26b) et dans la zone de transition des deux sections de cône (26a, 26b) un anneau d'étanchéité intérieure (27) adjacent à la surface intérieure de l'ouverture en forme d'entonnoir (20) en position fermée du cône de fermeture (26) est maintenu dans un état non relié à un autre réservoir pour la fermeture étanche au gaz du réservoir respectif.

9. Le dispositif selon la revendication 8, **caractérisé en ce qu'**un anneau (29) s'élargissant vers l'extérieur est formé respectivement sur le bord libre de l'ouverture en forme d'entonnoir (20) des réservoirs (5, 9, 13, 32, 34), dans lequel les bords libres viennent en butée l'un contre l'autre au transfert de la poudre entre les deux réservoirs et sont scellés l'un contre l'autre par un anneau d'étanchéité extérieur (28) maintenu sur l'un des bords.

10. Le dispositif selon l'une des revendications 7 à 9, **caractérisé en ce que** le cône de fermeture (26) est en outre guidé dans un cylindre (31) jouxtant le cône d'ouverture (22).

11. Le dispositif selon la revendication 1, **caractérisé en ce que** pour le prélèvement du dispositif de frittage par laser le réservoir de stockage (2) est maintenu manuellement déplaçable horizontalement dans des rainures (19) d'un élément de maintien (14) et l'élément de maintien (14) peut être soulevé et abaissé à une plaque de guidage (19) déplaçable horizontalement à l'aide d'un moteur (15).

12. Le dispositif selon l'une des revendications précédentes, **caractérisé en ce que** le traitement de tamis et les étapes de transport associées peuvent être commandés en fonction d'un nombre prédéterminé de couches de soudure générées.
